# EUROPEAN PATENT APPLICATION

(11) **EP 4 827 033 A1**
(43) Date of publication of application: **21.10.2026**
(21) Application number: 24909886.4
(22) Date of filing: 22.08.2024
(51) Int. Cl.: H04L 5/00

(54) **DATA TRANSMISSION METHOD, AND DEVICE AND STORAGE MEDIUM**

(30) Priority: 29.12.2023 CN 202311872505
(71) Applicant: ZTE Corporation, Shenzhen, Guangdong 518057 (CN)
(72) Inventor: LIU, Aihua, Shenzhen, Guangdong 518057 (CN); ZHAO, Fuchuan, Shenzhen, Guangdong 518057 (CN)
(74) Representative: Aipex B.V.
(86) International application number: PCT/CN2024/113954
(87) International publication number: WO 2025/138936

(57) **Abstract**

Provided are a data transmission method and device, and a storage medium. The data transmission method being applied to a first communication device includes the following: rate adaptation is performed on a service signal stream in a signal adaptation manner through the first channel layer to obtain a corresponding service signal frame; first information of a first encoding format is inserted into the service signal frame through the first channel layer; time slots are divided in a time slot division manner through the first segment layer to obtain a corresponding time slot granularity; and a corresponding segment layer instance is selected according to the time slot granularity through the first segment layer, and the corresponding segment layer instance is transmitted to a second communication device.

## Description

### TECHNICAL FIELD

The present disclosure relates to the technical field of communication, and in particular to a data transmission method and device, and a storage medium.

### BACKGROUND

As a next-generation standard architecture for metro transport networks, the metro transport network (MTN) is designed to introduce a time division multiplexing (TDM) layer network into the IEEE Ethernet protocol stack. The MTN segment layer reuses the processing logic of the optical internetworking forum (OIF) flexible Ethernet (FlexE). The interface rate types currently supported by the MTN are basically aligned with the range described in OIF FlexE 2.2, that is, a rate range from 50 gigabit Ethernet (GE) to 400 GE is supported. The MTN client layer supports standardized Ethernet interface rates (typically including 10 GE, 25 GE, 50 GE, 100 GE, 200 GE, and 400 GE).

With the development of the Ethernet interface rate, IEEE is developing beyond 400 G (B400G) rate interfaces such as 800 GE and 1.6 terabit Ethernet (TE), and MTN needs to support B400G Ethernet client layer signals. At the same time, OIF has also initiated the work on 800 GE/1.6 TE FlexE, and MTN also needs to support B400G MTN interface rates and MTN channel processing functions. However, the current technologies regarding MTN processing, such as client signal adaptation, channel switching and segment layer adaptation of the MTN channel layer, are not yet capable of supporting B400G processing.

### SUMMARY

In this regard, the embodiments of the present disclosure provide a data transmission method and device, and a storage medium to implement the processing function of B400G service signals, channel rates and interface rates.

A data transmission method, being applied to a first communication device, is provided by the embodiments of the present disclosure. The first communication device includes a first channel layer and a first segment layer. The first channel layer and the first segment layer support a first interface rate beyond 400 G. The data transmission method includes the following:
Rate adaptation is performed on a service signal stream in a signal adaptation manner through the first channel layer to obtain a corresponding service signal frame.

First information of a first encoding format is inserted into the service signal frame through the first channel layer.

Time slots are divided in a time slot division manner through the first segment layer to obtain a corresponding time slot granularity.

A corresponding segment layer instance is selected according to the time slot granularity through the first segment layer, and the corresponding segment layer instance is transmitted to a second communication device.

The embodiments of the present disclosure provide a communication device including a memory and one or more processors.

The memory is configured to store one or more programs.

The one or more programs, when executed by the one or more processors, cause the one or more processors to implement the method according to any of the above embodiments.

The embodiments of the present disclosure provide a storage medium storing a computer program, and the computer program, when executed by a processor, implements the method according to any of the above embodiments.

### BRIEF DESCRIPTION OF DRAWINGS

FIG. 1 is a schematic diagram of an architecture of a B400G MTN system according to an embodiment of the present disclosure.
FIG. 2 is a flowchart of a data transmission method according to an embodiment of the present disclosure.
FIG. 3 is a schematic diagram of a configuration of a 64/66b code block according to an embodiment of the present disclosure.
FIG. 4 is a schematic diagram of a 256/257b encoding format configuration according to an embodiment of the present disclosure.
FIG. 5 is a schematic diagram of an encoding format configuration of a 256/257b idle code block according to an embodiment of the present disclosure.
FIG. 6 is a schematic diagram of an encoding format configuration of a 256/257b operation administration maintenance (OAM) code block according to an embodiment of the present disclosure.
FIG. 7 is a schematic diagram of static configuration manner one for MTN channel layer compatible encoding according to an embodiment of the present disclosure.
FIG. 8 is a schematic diagram of static configuration manner two for MTN channel layer compatible encoding according to an embodiment of the present disclosure.
FIG. 9 is a schematic diagram illustrating a time slot division manner of an L*64B encoding segment layer for MTN B400G according to an embodiment of the present disclosure.
FIG. 10 is a schematic diagram illustrating hierarchical channel switching based on L*64B encoding for MTN B400G according to an embodiment of the present disclosure.
FIG. 11 is a schematic diagram illustrating an MTN B400G hierarchical instance according to an embodiment of the present disclosure.
FIG. 12 is a schematic diagram illustrating an MTN B400G deactivated instance padding an L*64B encoding pattern according to an embodiment of the present disclosure.
FIG. 13 is a schematic diagram illustrating coordinated switching between activation or deactivation of an MTN B400G segment layer instance and Ethernet energy saving according to an embodiment of the present disclosure.
FIG. 14 is a schematic diagram illustrating an MTN B400G L*64B encoding pattern for fault padding according to an embodiment of the present disclosure.
FIG. 15 is a schematic diagram illustrating a newly defined encoding type in a 256/257b encoding format for MTN 800 G according to an embodiment of the present disclosure.
FIG. 16 is a schematic diagram of a newly defined idle encoding and OAM encoding in a 256/257b encoding format for MTN 800 G according to an embodiment of the present disclosure.
FIG. 17 is a schematic diagram of an error and fault padding pattern for MTN 800 G according to an embodiment of the present disclosure.
FIG. 18 is a schematic diagram illustrating bus-triggered time slot table adjustment and switching upon MTN 800 G instance deactivation or Ethernet interface energy-saving shutdown according to an embodiment of the present disclosure.
FIG. 19 is a schematic diagram illustrating a newly defined encoding type in an MTN 1.6 T 256/257b encoding format according to an embodiment of the present disclosure.
FIG. 20 is a schematic diagram illustrating newly defined idle encoding and OAM encoding in an MTN 1.6 T 256/257b encoding format according to an embodiment of the present disclosure.
FIG. 21 is a schematic diagram illustrating hierarchical channel switching based on MTN B400G 256/257b encoding according to an embodiment of the present disclosure.
FIG. 22 is a schematic diagram illustrating MTN 800 G 256/257b segment layer encoding with a time slot granularity of 20 G according to an embodiment of the present disclosure.
FIG. 23 is a schematic diagram illustrating MTN B400G hierarchical instance compatible processing according to an embodiment of the present disclosure.
FIG. 24 is a schematic diagram illustrating a newly defined IDLE encoding and OAM encoding in an MTN 1.6 T 512/514b encoding format according to an embodiment of the present disclosure.
FIG. 25 is a schematic diagram illustrating hierarchical channel switching based on MTN B400G 256/257b encoding according to an embodiment of the present disclosure.
FIG. 26 is a schematic diagram illustrating MTN B400G multi-hierarchical instance compatible processing according to an embodiment of the present disclosure.
FIG. 27 is a structural block diagram of a data transmission device according to an embodiment of the present disclosure.
FIG. 28 is a structural schematic diagram of a communication device according to an embodiment of the present disclosure.

### DETAILED DESCRIPTION

Embodiments of the present disclosure are described in more detail hereinafter with reference to the drawings. The present disclosure is described below with reference to the drawings of the embodiments, and the embodiments given are intended to illustrate and not intended to limit the scope of the present disclosure.

The data transmission method in the embodiments of the present disclosure is applied to a first communication device. The first communication device refers to an MTN device as a source end, and a second communication device refers to an MTN device as a sink end. Moreover, the MTN devices as the source end and the sink end both include a first channel layer and a first segment layer. The first channel layer and the first segment layer support a first interface rate beyond 400 G.

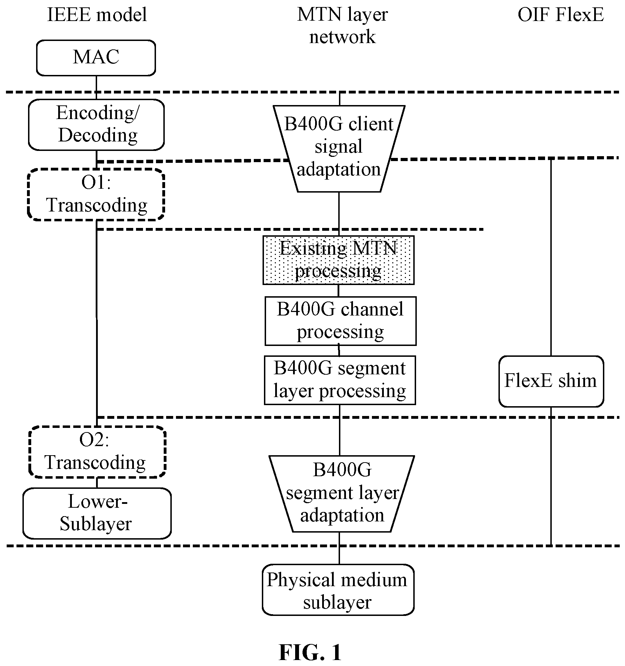

In an example, the architecture of the MTN system is described by taking the B400G channel layer as the first channel layer and the B400G segment layer as the first segment layer. FIG. 1 is a schematic diagram of an architecture of a B400G MTN system according to an embodiment of the present disclosure. As shown in FIG. 1, functions such as B400G client signal adaptation, B400G channel processing, B400G segment layer processing and B400G segment layer adaptation are added to the MTN layer network of the MTN system to support carrying B400G client signals, support a B400G rate MTN channel, operation administration maintenance (OAM) and switching, and support processing solutions of the B400G segment layer rate.

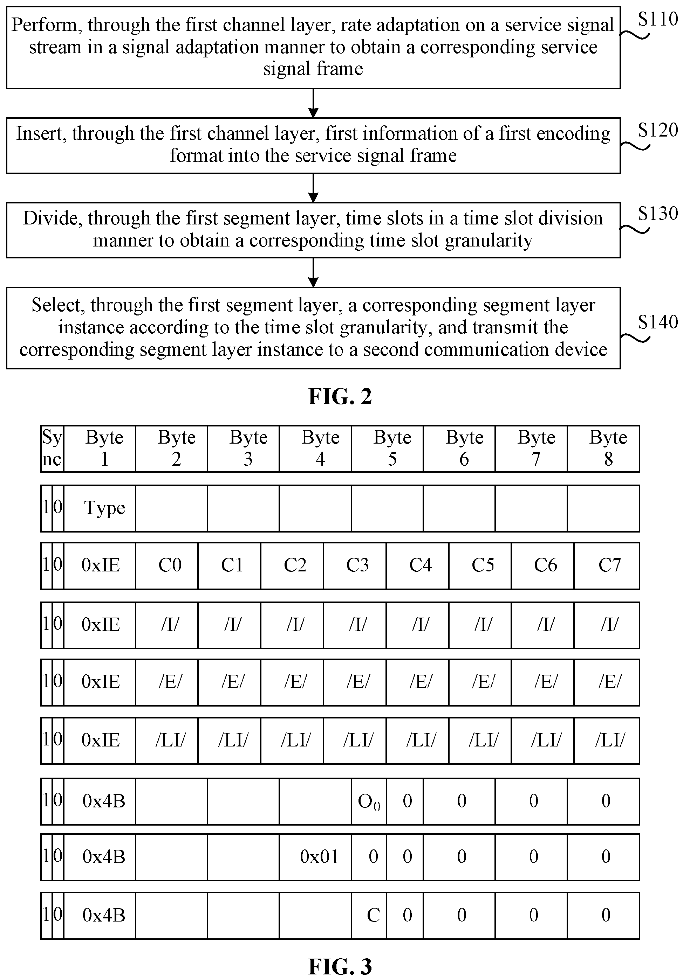

In an embodiment, FIG. 2 is a flowchart of a data transmission method according to an embodiment of the present disclosure. This embodiment is applied to the cases of supporting access adaptation for B400G client signals, and supporting MTN channels, OAM and switching with a B400G rate. This embodiment may be executed by the first communication device as the source end. As shown in FIG. 2, this embodiment includes S110 to S140.

In S110, rate adaptation is performed on a service signal stream in a signal adaptation manner through the first channel layer to obtain a corresponding service signal frame.

In S120, first information of a first encoding format is inserted into the service signal frame through the first channel layer.

In an example, the first encoding format refers to the 256/257b encoding format, and the first information may be OAM information.

In S130, time slots are divided in a time slot division manner through the first segment layer to obtain a corresponding time slot granularity.

In S140, a corresponding segment layer instance is selected according to the time slot granularity through the first segment layer, and the corresponding segment layer instance is transmitted to a second communication device.

The first communication device as the source end performs rate adaptation on service signal streams with different rates in a signal adaptation manner to obtain corresponding service signal frames, inserts the first information of the first encoding format into the service signal frames through the first channel layer, divides the time slot in a time slot division manner through the first segment layer to obtain different time slot granularities, and selects the corresponding segment layer instance according to the time slot granularities through the first segment layer and transmits the corresponding segment layer instances to the second communication device as the sink end.

In an embodiment, the signal adaptation manner at least includes one of the following: signal adaptation of a single channel at the first interface rate, or signal adaptation of at least two channels at a second interface rate. The second interface rate is less than the first interface rate. The signal at the first interface rate refers to the signal with a single channel rate of B400G. For example, the first interface rate may be 800 G or 1.6 T. The signal at the second interface rate refers to the signal with a single channel rate of 400 G, for example, adaptation may be performed on 400 G signals of K channels, where K is an integer greater than 1. In an embodiment, the access adaptation manner for B400G client signals may include various signal adaptation manners, including but not limited to single-channel B400G signal adaptation or K-channel 400 G signal adaptation, where K is not less than 1. The encoding format may adopt the L*64B encoding format for signal adaptation. When L is equal to 1, the L*64B encoding format is compatible with the currently defined 64/66b signal adaptation manner. Except for the rate beyond 400 G, other processes are substantially the same as the existing manner, as transcoding position option O2 in FIG. 1. When L is equal to 4, the encoding format is a 256/257b encoding format. When L is equal to 8, the encoding format is a 512/514b encoding format, and so on, as transcoding position option O1 in FIG. 1.

In an embodiment, the service signal stream includes the service signal frame. The service signal frame includes a first number of first-type code blocks. A code block type of the first-type code blocks includes at least one of: an idle code block, a local fault code block (LF code block) related to fault indication, a remote fault code block (RF code block) related to fault indication, a low power idle (LPI) code block, an error code block, a sequence code block, or a padding code block. In an example, the first-type code blocks may be 64/66b code blocks. When the first number is a positive integer greater than 1, transcoding processing between the 64/66b encoded signal and the L*64B encoded signal may be performed. The ordinary transcoding processing adopts the existing general solution. Specific control code blocks include an idle code block required for rate adaptation, an LF code block related to fault indication, an RF code block related to fault indication, an LPI code block, an error code block, an OAM code block, and a padding code block. FIG. 3 is a schematic diagram of a configuration of a 64/66b code block according to an embodiment of the present disclosure. Optimization adaptation and transcoding processing may be performed on the 64/66b code block to simplify the transcoding process. As shown in FIG. 3, the first line shows the general format of the 66b code block, beginning with 10 to denote a control block. The second line shows the general format of the 66b control code block, beginning with 10 to denote a control code block, and type denotes the type of the control code block (including 0x1E and 0x4B). For the control code block of 0x1E, in lines 3 to 6, C0 to C7 indicate that eight 7-bit indicators may be present, and the indicators may be Idle (abbreviated as I), Error (abbreviated as E) and LI (low power consumption indicator). For the control code block of 0x4B, 0x4B is used to indicate the sequence (Ordered set) code block, where O code is defined as 0xC to indicate that the Ordered set code block is used for MTN OAM, and 0x0 is used for the status indications of the above LF or RF.

In an embodiment, in the case where second-type code blocks are composed of the first number of first-type code blocks, the first number is greater than 1, a control code block in the first-type code blocks is adjusted to a boundary of the first-type code blocks by adjusting a position of the control code block and combining rate adaptation of the first-type code blocks to obtain the corresponding second-type code blocks. In an example, the second-type code blocks may be 256/257b control code blocks or L*64B control code blocks; and when the first number L is greater than 1, the above-mentioned optimization adaptation and transcoding processing involve adjusting a specified control code block to the boundary of the L*64B encoding format by adjusting the position of the specific control code block in the 64/66b code blocks and combining the rate adaptation of the 64/66b code blocks, thereby obtaining the corresponding 256/257b control code blocks or L*64B control code blocks, thus simplifying the processing of the specified control code block for the L*64B encoding format.

In an embodiment, when the first number of first-type code blocks have the same code block type, all control code blocks in the first number of first-type code blocks are adapted into one group of control code blocks, and this group of control code blocks are encoded using at least one of the following N*66B encoding formats: 64/66b encoding, 256/257b encoding, or 512/514b encoding.

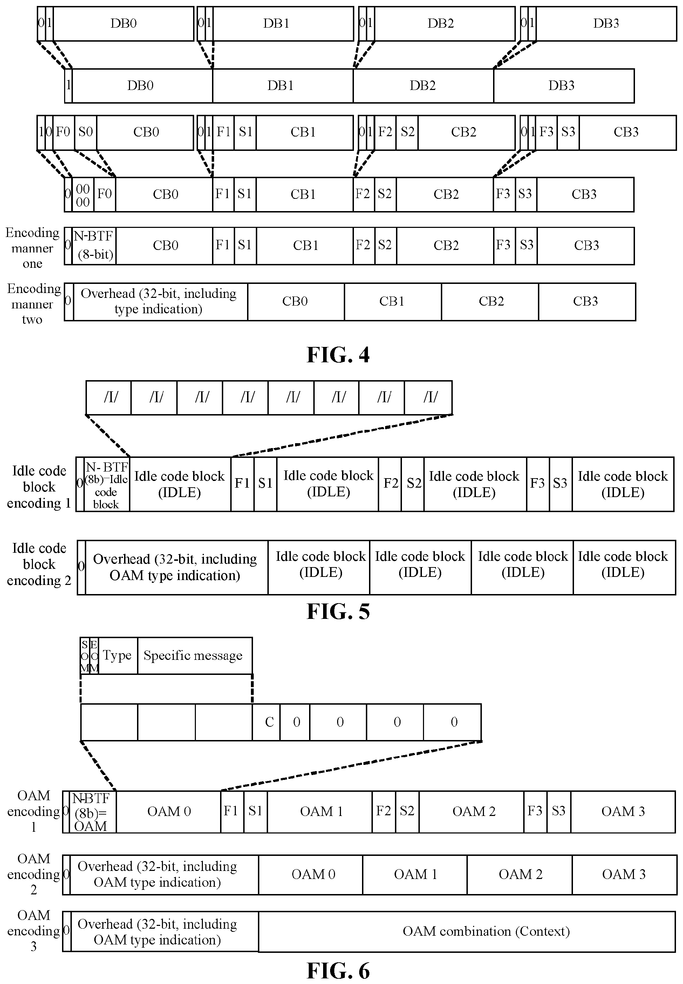

Overhead indication information is added to the N*66B encoding format. The overhead indication information at least includes one of: a code block type of the second-type code blocks, or a pattern type of the second-type code blocks. In an example, the second-type code blocks may be L*64B control code blocks. The code block type of the second-type code blocks is the code block type of the L*64B control code block, and the pattern type of the second-type code blocks is the pattern type of the L*64B control code block. L identical 64/66b control code blocks are adapted into one group to perform L*64B encoding directly, further simplifying the identification, extraction, replacement and termination of the specified control code blocks. Since the L identical 64/66b control code blocks form one group, the encoding contains a large amount of redundant information. Compression of redundant information may be defined, and then the overhead indication information, including but not limited to the code block type and the pattern type of the L*66B control code blocks, may be added to the space freed up by the compression. FIG. 4 is a schematic diagram of a 256/257b encoding format configuration according to an embodiment of the present disclosure. As shown in FIG. 4, when L is equal to 4, the encoding format is an optimized 256/257b encoding format. When L is equal to 8, the encoding format is an optimized 512/514b, and so on.

In an embodiment, a determination manner of the second-type code blocks includes the following:

A type header of a first code block in the first-type code blocks is redefined as a compatible new type.

Alternatively, a control code block type indication in each of the first-type code blocks is moved to a first position, an overhead content in each of the first-type code blocks is moved to a second position, and a format of the first position or content of the first position is redefined. The first position is located prior to the second position. In an example, the second position refers to a position of the latter L*56b, and the first position refers to a position of the former L*8b. When the first number L is equal to 4, the implementation manner of the optimized 256/257b encoding format includes: encoding manner one involves redefining the type header of the first 64/66b control code block (code block type (BTF) including a 4-bit former nibble F and a second 4-bit nibble S) into a type (a new code block type (N-BTF)) satisfying the Hamming distance; and encoding manner two involves directly moving the content part of the control code block (CB) to the position of the latter L*56b, and using the space of the former L*8b as the overhead space of the entire encoding. The former L*8b may include type indication information, as shown in FIG. 4.

In an embodiment, the redefined type header includes a redefined first nibble and a redefined second nibble. The first nibble refers to the former nibble F, and the second nibble refers to the latter nibble S. For the optimized new type header, when the first number L is equal to 4, a 256/257b forwarding solution for the former nibble F and the latter nibble S may be newly defined. Alternatively, an existing 256/257b solution may be adopted using undefined or currently agreed-upon invalid values. For example, the 256/257b type indicates that control blocks are included, but the former nibble F is 1111 (indicating a composition of four data code blocks). In another example, at least the first position in the former nibble of 256/257b is indicated as 0 (control code block), but the control code block type (CB Type) of the latter nibble S is a currently undefined value. The same method is applied to the case of L being 8, and so on.

In an embodiment, when the first-type code blocks are idle code blocks, and a rate of the service signal stream does not match a rate of the first channel layer, addition or deletion of the idle code blocks is performed using a redefined idle encoding format as a basic unit.

The redefined idle encoding format includes the first encoding format where a code block type in type indication information is an idle code block, and the first encoding format where a code block type in the overhead indication information is an idle code block. For the L*64b encoding format, with L greater than 1, the optimized encoded idle encoding format is taken as the basic unit for rate adaptation. When L is equal to 4, an optimized 256/257b encoding format with a newly defined control type or the code block type indicated in the overhead information as the idle type is defined as the new idle encoding format. When L is equal to 8, an optimized 512/514b encoding format with a newly defined control type or the code block type indicated in the overhead information as the idle type is defined as the new idle encoding format, and so on. When the client signal rate does not match the channel layer rate, addition or deletion of the idle code blocks is performed using a redefined idle encoding format as a basic unit to achieve accurate rate adaptation. FIG. 5 is a schematic diagram of an encoding format configuration of a 256/257b idle code block according to an embodiment of the present disclosure. As shown in FIG. 5, two encoding manners, namely IDLE encoding manner one and IDLE encoding manner two, are provided, and corresponding idle code blocks are taken as CB0 to CB3 shown in FIG. 4.

In an embodiment, the first channel layer at least includes one of the following functions: inserting an OAM overhead at a source end, terminating an OAM overhead at a sink end, non-intrusively monitoring an overhead at an intermediate node, or channel switching with the first interface rate as a segment layer interface. When the first channel layer is the B400G channel layer, the B400G channel layer includes the following functions: inserting the OAM overhead at the source end, terminating the OAM overhead at the sink end, optionally handling non-intrusive monitoring overhead at the intermediate node, and performing B400G channel switching, etc.

In an embodiment, the first channel layer supports channel OAM processing, and the channel OAM processing at least includes one of the following functions: OAM encoding format, OAM transmission and reception processing, or non-intrusive monitoring. The B400G channel OAM processing includes OAM encoding format, OAM transmission and reception processing, non-intrusive monitoring, and other functions. The OAM encoding format is adapted to the B400G channel encoding format and corresponds to the B400G-compatible signal encoding format. The B400G channel layer encoding format may adopt L*64b encoding. When L is equal to 1, the defined OAM code block type is adopted to achieve compatibility with G.8310 manner. When L is equal to 4, four consecutive 64/66b OAM code blocks may be specified to form a 256/257b code block as the encoding format for the B400G channel layer OAM overhead, and so on.

In an embodiment, OAM function is processed by identifying an OAM-type field of the first encoding format. The source end, the sink end, or the optional intermediate node of the MTN channel processes the OAM function by identifying the OAM-type field of the defined L*64B encoding format.

In an embodiment, a manner of inserting the first information into the service signal frame through the first channel layer includes one of the following: taking an identified and defined OAM code block of the first encoding format as an existing idle code block of the first encoding format; deleting an idle code block after an OAM code block is inserted in an encoding inter-frame gap; padding an idle code block after an OAM code block is deleted; and inserting an OAM code block at any position of the second-type code blocks in real time according to an insertion interval of the OAM code block. In an example, the first encoding format is a 256/257b encoding format. The channel layer OAM encoding insertion may be performed by either identifying 64/66b OAM encoding in the L*64B encoding format in a manner compatible with the existing solutions, or directly identifying the OAM encoding in the defined L*64B encoding format and then replacing the existing L*64B idle encoding or forcibly inserting OAM encoding in the encoding inter-frame gap and deleting the idle encoding. The OAM encoding termination is performed by simply deleting OAM encoding and padding idle encoding, or by forcibly deleting OAM encoding and adding idle encoding. For the OAM encoding of the defined L*64B encoding format, the OAM encoding may be inserted at any L*64B position in real time according to the OAM insertion interval by using the characteristics of the encoding format, reducing the change in the OAM insertion position caused by waiting for L*64 idle encoding or frame interval.

In an embodiment, when the first-type code blocks are OAM code blocks, a determination manner of the second-type code blocks further includes combining payload bits in the first number of first-type code blocks and combining overhead bits in the first number of first-type code blocks. For B400G MTN channel OAM transmission and reception, with the increase of L in the encoding format, the OAM bandwidth increases accordingly, the OAM overhead definition and transmission and reception processing may be optimized, and the definition of OAM information may be unified. FIG. 6 is a schematic diagram of an encoding format configuration of a 256/257bOAM code block according to an embodiment of the present disclosure. Assuming that the first number is equal to 4, as shown in FIG. 6, three OAM encoding manners are included. OAM encoding manner one and OAM encoding manner two are shown in FIG. 4, and the corresponding OAM0 to OAM3 are taken as the corresponding CB0 to CB3, respectively. For OAM encoding manner three, four OAM code blocks (OAM0 to OAM3) are combined and the overhead bits of the four OAM code blocks are combined to obtain the corresponding overhead (occupying 32 bits).

In an embodiment, a product of the time slot granularity and a number of time slots satisfies a total rate of the first segment layer. B400G MTN channel switching supports channel switching with the MTN interface rate beyond 400 G. For the channel rate beyond 400 G, compared with the existing solutions, a larger time slot granularity may be adopted to configure the channel time slot allocation table and perform the channel switching. The time slot granularity and the number of time slots satisfy the mathematical relationship that the product of these two is equal to the total rate of the B400G segment layer (the relationship between the time slot granularity G, the number N of time slots, and the total rate R of the B400G segment layer is expressed as G × N = R).

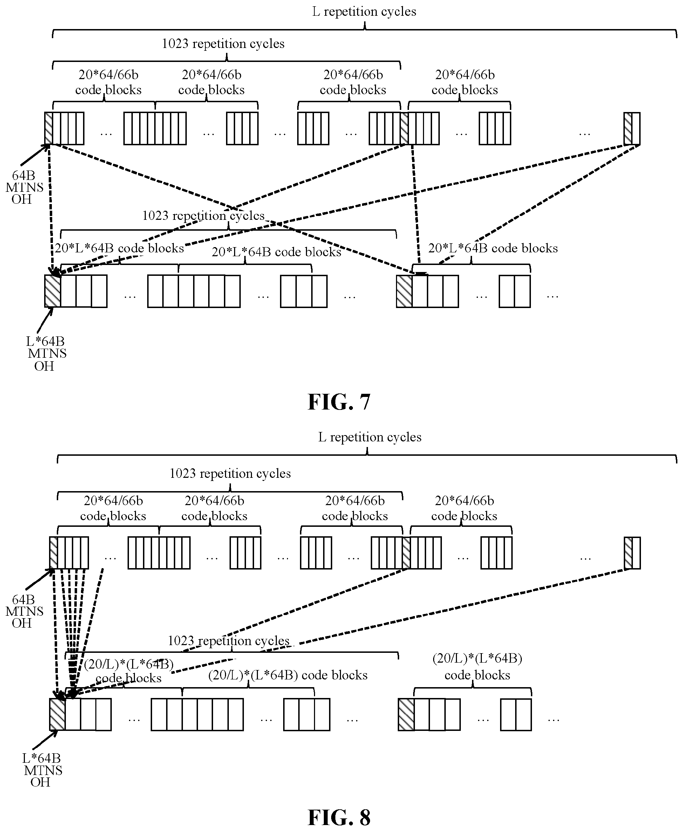

In an embodiment, a configuration manner for encoding the first number of first-type code blocks into the second-type code blocks includes: performing cyclic interpolation using a product of the first number and a number of bit repetitions, and consecutively using the first number of first-type code blocks. The time slot granularity may be compatible with the encoding format. For the L*64B encoding format, when L is greater than 1, a compatible manner between the L*64B encoding format and the 64/66b encoding format includes selecting L 64/66b code blocks according to the configuration and encoding the L 64/66b code blocks into the L*64B encoding format. Technically, the selection of the L 64/66b code blocks for L*64B format may be specified through configuration, with a consistent end-to-end agreement across the MTN channel. When L is equal to 4, a time slot granularity of 20 G may be selected. When L is equal to 8, a time slot granularity of 80 G may be selected. FIG. 7 is a schematic diagram of static configuration manner one for MTN channel layer compatible encoding according to an embodiment of the present disclosure. FIG. 8 is a schematic diagram of static configuration manner two for MTN channel layer compatible encoding according to an embodiment of the present disclosure. As shown in FIG. 7, the configuration is performed using L*1023 cyclic interpolation. As shown in FIG. 8, the configuration is performed consecutively using L 64/66b code blocks.

In an embodiment, the data transmission method further includes determining a corresponding number of time slots according to the time slot granularity.

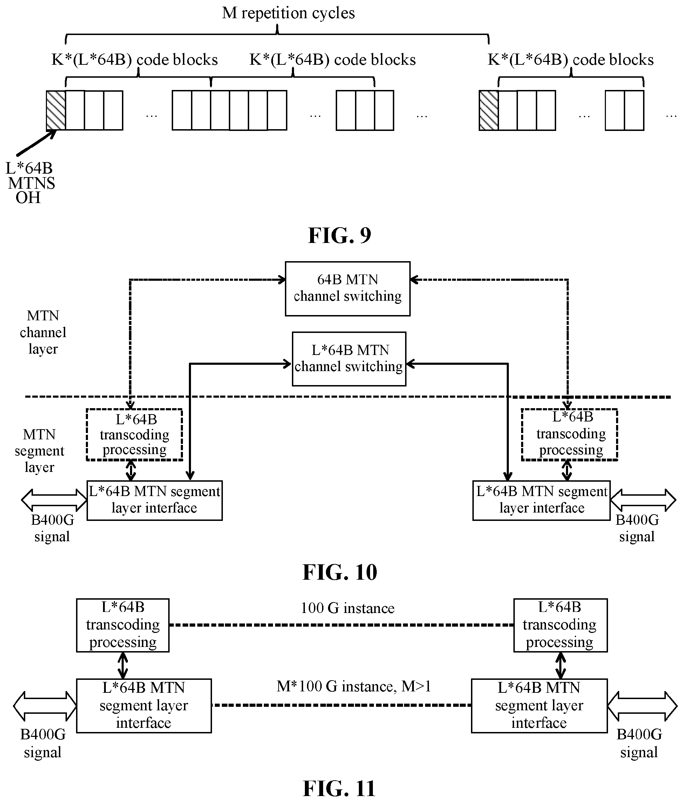

The product of the number of time slots and the time slot granularity is equal to an interface capacity of the first segment layer. According to the encoding format, a manner compatible with the Ethernet segment layer rate may also be selected. In this case, a new MTN time slot division manner needs to be defined, with a time slot granularity such as 25 Gbps, 50 Gbps, or 100 Gbps. FIG. 9 is a schematic diagram illustrating a time slot division manner of an L*64B encoding segment layer for MTN B400G according to an embodiment of the present disclosure. Similar to the MTN segment layer, the number of time slots is selected according to the time slot granularity, satisfying the relationship that the product of the number of time slots and the time slot granularity is equal to the interface capacity of the MTN segment layer. For example, for an 800 G segment layer interface, if a time slot granularity of 100 G is selected, the number of time slots is 8, while for a 1.6 T segment layer interface, if the time slot granularity of 100 G is selected, the number of time slots is 16. The selection of the repetition number M of cycles is determined according to the overhead budget, as shown in FIG. 9.

In an embodiment, during a process of switching channels at different rate levels by the first channel layer, a hierarchical switching path is adopted, and switching of multiple rate levels and switching of encoding formats are supported. FIG. 10 is a schematic diagram illustrating hierarchical channel switching based on L*64B encoding for MTN B400G according to an embodiment of the present disclosure. During a process of B400G channel switching, switching channels at different rate levels may also adopt the hierarchical switching path, and switching of multiple rate levels and switching of encoding formats are supported. For example, the first rate level is the existing switching path using the 64/66b encoding format for the rates of 400 G and below. After the channel switching for the rates of 400 G and below is completed based on a time slot granularity of 5 G, the 64/66b encoding is transcoded to the 256/257 encoding, and the channel switching for the rates beyond 400 G is further performed based on a time slot granularity of 20 G, as shown in FIG. 10.

In an embodiment, the first segment layer at least includes one of the following functions: rate adaptation of a channel layer and a segment layer, time slot mapping of a segment layer, or adaptation of a segment layer and a service layer. B400G segment layer processing includes rate adaptation of a B400G channel layer and a B400G segment layer, time slot mapping of the segment layer and adaptation of the segment layer and a service layer.

In an embodiment, a manner of the rate adaptation between the first channel layer and the first segment layer includes: the signal adaptation manner with the first interface rate, and rate adaptation using different encoding formats. The rate adaptation between the B400G channel layer and the B400G segment layer may follow the above-mentioned rate adaptation manner for the B400G client signal, or use different encoding formats for rate adaptation. For example, the client signal rate adopts the 64/66b encoding format, while the rate adaptation between the channel layer and the segment layer adopts the 256/257b encoding format. Reservation of space and position for inserting other overhead into the segment layer and the service layer needs to be taken into consideration during rate adaptation, and the manner of reservation includes padding with the idle encoding. Rate adaptation here may also be performed together with rate adaptation for the client signal.

In an embodiment, the first segment layer unifies and simplifies support of a segment layer for the first interface rate through an instance, and the first segment layer selects a second number of segment layer instances with a third interface rate.

The time slot granularity of the first segment layer is the same as a time slot granularity of the first channel layer, or a rate level corresponding to the time slot granularity of the first segment layer is greater than a rate level corresponding to a time slot granularity of the first channel layer. FIG. 11 is a schematic diagram illustrating an MTN B400G hierarchical instance according to an embodiment of the present disclosure. The B400G segment layer unifies and simplifies support of the segment layer for B400G through a similar MTN instance, and an MTN segment layer instance at a rate of M*100 G may be selected. When M is equal to 1, it is compatible with G.8312 solution. When M is equal to 2, it may match the physical channel rate at 200 G. When M is equal to 4, it may match the 400 G rate of the IEEE 802.3 physical coding sublayer (PCS). The time slot granularity of the segment layer may be the same as the time slot granularity of the channel layer, or only the time slot granularity at the higher rate level may be selected. When M is greater than 1, the MTN B400G segment layer may support the hierarchical instance to achieve compatibility with the existing 100 G instance, as shown in FIG. 11.

In an embodiment, the padding code block supports carrying an auxiliary overhead for segment layer instance identification through a redefined code block, and redefining the padding code block includes redefining an original padding code block format and introducing a new padding code block format.

In an embodiment, the first segment layer supports dynamic activation and deactivation of the segment layer instance. The B400G segment layer may support dynamic activation and deactivation of the instance, enabling flexible adjustment of the segment layer rate. Activation and deactivation may be combined with energy-efficient Ethernet (EEE) technology. The activation/deactivation function may be implemented through an MTN management and control interface, newly added MTN negotiation signaling, and other manners.

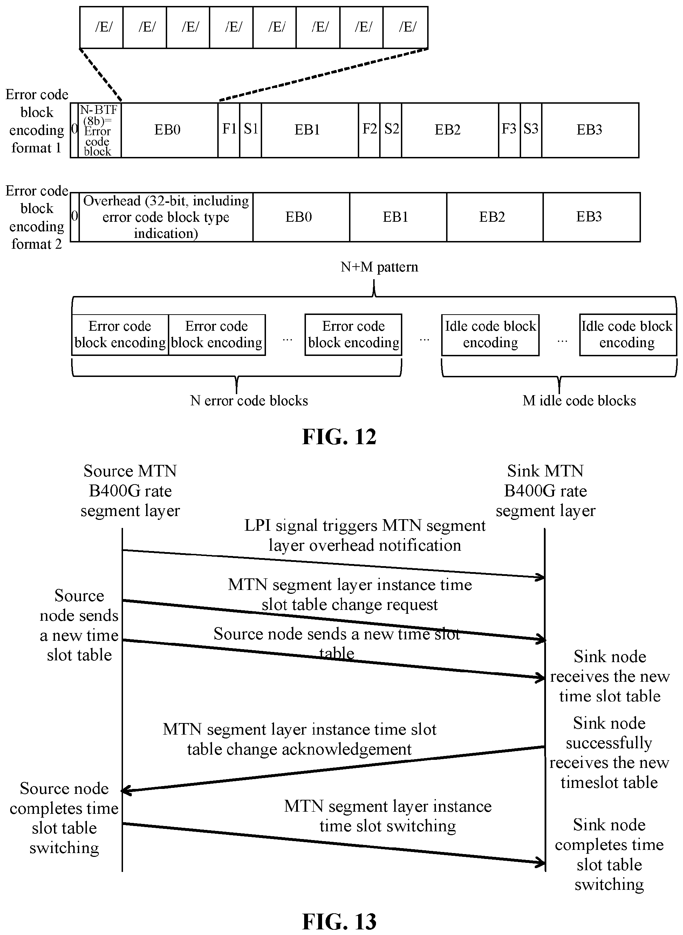

In an embodiment, the data transmission method further includes the following: an activated segment layer instance is transmitted to the second communication device through the first segment layer. The segment layer instance carries an instance identifier and service data, and a padding pattern of the segment layer instance includes at least one of an error code block or an idle code block. FIG. 12 is a schematic diagram illustrating an MTN B400G deactivated instance padding an L*64B encoding pattern according to an embodiment of the present disclosure. The activation or deactivation of the B400G segment layer instance may be distinguished by transmitting a specific instance identify (ID) and data, and the data pattern used for padding may be in a specific L*64B encoding format, typically including the M+N combination of Error encoding and IDLE encoding. For example, when L is equal to 1, a 64/66b error code block compatible with G.8312 is adopted. When L is equal to 4, a newly defined 256/257b error code block type is used for padding. To support rate adaptation, the padding pattern may adopt an interleaved padding manner of error code blocks (EB) and idle code blocks, as shown in FIG. 12.

In an embodiment, when a service traffic of the first segment layer is less than a preset energy-saving traffic, an LPI signal is replaced with overhead signaling of the first segment layer to trigger the first segment layer to perform time slot switching. FIG. 13 is a schematic diagram illustrating coordinated switching between activation or deactivation of an MTN B400G segment layer instance and Ethernet energy saving according to an embodiment of the present disclosure. Capacity negotiation signaling for activation/deactivation of the B400G segment layer interface instance may be implemented by extending the link layer discovery protocol (LLDP), the LPI signal may be replaced with the overhead signaling in combination of the Ethernet energy-saving technology, and dynamic switching and conditional lossless switching can be achieved by combining the switching mechanism of the MTN segment layer time slot table. When the service traffic of the segment layer decreases to a level that can support energy saving, by replacing the LPI signal with the MTN segment layer overhead for transmission, the modification and switching of the segment layer time slot table are triggered, thus achieving the dynamic switching of the segment layer time slot table configuration along with the LPI signal. When the timing of LPI and time slot table switching satisfies the lossless switching time requirements, the activation/deactivation of the energy-saving instance can be achieved without service impairment. The coordinated process is shown in FIG. 13.

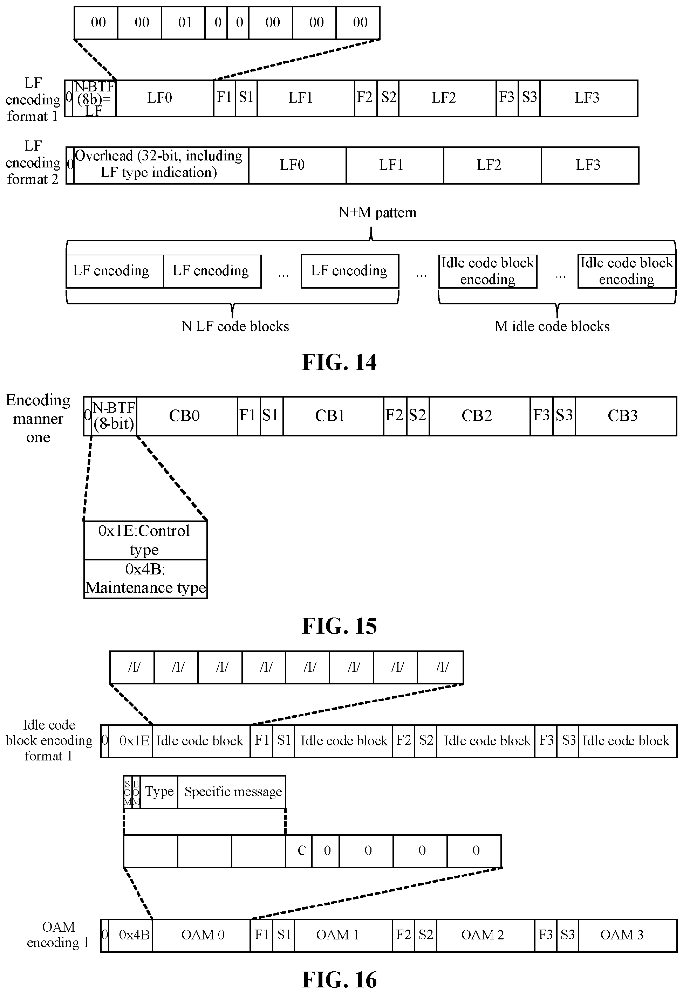

In an embodiment, the data transmission method further includes that a fault overhead format and a fault encoding format of the first encoding format are redefined through the first segment layer to indicate a fault. A padding pattern corresponding to the fault includes at least one of an idle code block or an error code block. FIG. 14 is a schematic diagram illustrating an MTN B400G L*64B encoding pattern for fault padding according to an embodiment of the present disclosure. The B400G segment layer supports fault notification. The difference from the existing methods includes the definition of a new fault overhead format and a padded fault encoding format for different encoding formats. The padding pattern may adopt the specific L*66b encoding format typically including the M+N combination of Error encoding and IDLE encoding. For example, when L is equal to 1, a 64/66b error code block compatible with G.8312 is adopted. When L is equal to 4, a newly defined 256/257b error code block type is used for padding. To support rate adaptation, the padding pattern may adopt an interleaved padding manner of LF code blocks and idle code blocks, as shown in FIG. 14.

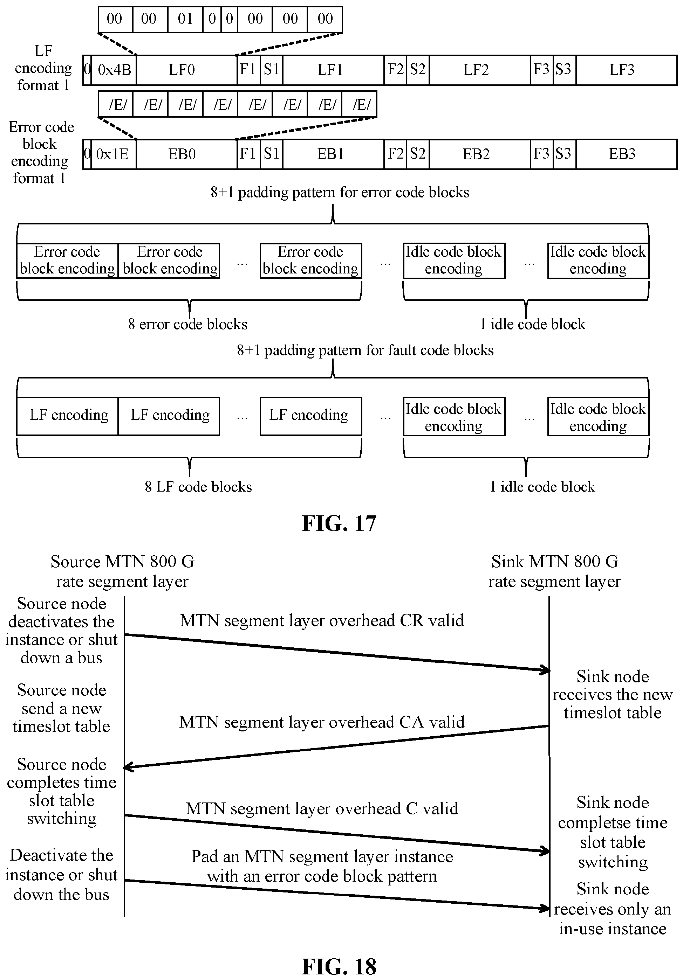

In embodiment one, the data transmission process of the MTN supporting an 800 G interface with the time slot granularity of 20 G is described. FIG. 15 is a schematic diagram illustrating a newly defined encoding type in an MTN 800 G 256/257b encoding format according to an embodiment of the present disclosure. FIG. 16 is a schematic diagram illustrating a newly defined idle encoding and OAM encoding in an MTN 800 G 256/257b encoding format according to an embodiment of the present disclosure. FIG. 17 is a schematic diagram illustrating an error and fault padding pattern for MTN 800 G according to an embodiment of the present disclosure. FIG. 18 is a schematic diagram illustrating bus-triggered time slot table adjustment and switching upon MTN 800 G instance deactivation or Ethernet interface energy-saving shutdown according to an embodiment of the present disclosure. As shown in FIG. 18, the method includes the following:

In step 1, an 800 G MTN segment layer interface, and MTN channel switching, channel OAM processing and corresponding rate adaptation functions at an 800 G segment layer rate are added to MTN equipment.

In step 2, the MTN channel layer and segment layer both adopt the 4*64B encoding format (when L is equal to 4, L*64B encoding format corresponds to the 256/257b encoding format). The time slot granularity of 20 G, which is compatible with the current MTN, is defined. The encoding format of the control code block adopts the encoding manner one, and the new type header may directly use an uncompressed value of the pre-configured type header of the 64/66b control code block (for example, 0xIE and 0x4B do not repeat with normal 256/257b encoding, and can be correctly identified by the MTN channel layer), as shown in FIG. 15.

In step 3, the MTN channel layer performs rate adaptation for client traffic using the defined 256/256b IDLE encoding, and inserts the defined 256/257b OAM encoding to transmit OAM information of the channel layer. The specific information format may directly follow the existing definition in ITU-T G.8312, as shown in FIG. 16.

In step 4, the MTN segment layer divides time slots using four 1023*20 cycles, with the time slot granularity of 20 G. For the 800 G interface physical layer solution based on 4*200 G, the segment layer instance solution at a 200 G rate is selected to facilitate Ethernet energy-saving coordination at the 200 G bus-level.

In step 5, the MTN segment layer pads the deactivated instance with an 8+1 pattern of Error encoding and IDLE encoding, and the 8+1 pattern of LF encoding and idle encoding for the fault segment layer is shown in FIG. 17.

In step 6, the process of MTN segment layer coordinating the deactivated instance with the segment layer overhead to adjust the MTN time slot capacity may follow the current MTN time slot table switching process. That is, when the source MTN segment layer determines that the instance may be deactivated, or that energy-saving may be performed by shutting down a certain segment layer hardware interface link, or when the source MTN segment layer is about to deactivate the instance, or when the source MTN segment layer is about to shut down an instance corresponding to a certain bus for energy saving, the source MTN dynamically adjusts the MTN segment layer time slot capacity by following the existing MTN segment layer time slot table switching overhead (time slot table request CR, time slot table acknowledgement CA and time slot table switching C). The process is shown in FIG. 18.

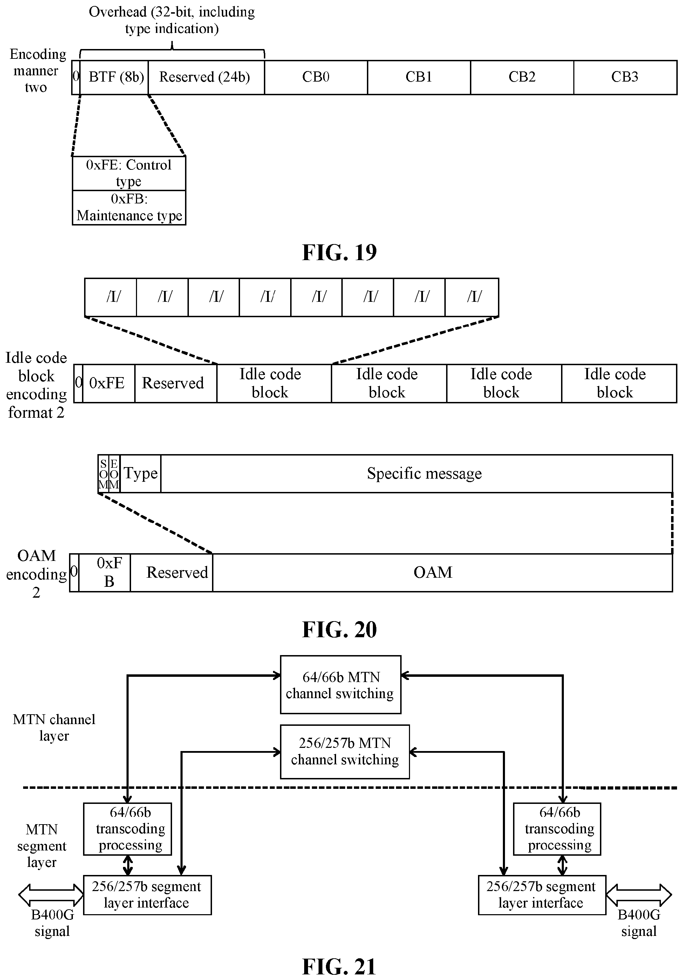

In embodiment two, the data transmission process of the MTN supporting the 1.6 T interface with the time slot granularity of 50 G is described. FIG. 19 is a schematic diagram illustrating a newly defined encoding type in a 256/257b encoding format for MTN 1.6 T according to an embodiment of the present disclosure. FIG. 20 is a schematic diagram illustrating a newly defined idle encoding and OAM encoding in a 256/257b encoding format for MTN 1.6 T according to an embodiment of the present disclosure.

In step 1, a 1.6 T MTN segment layer interface, and MTN channel switching, channel OAM processing and corresponding rate adaptation functions at a 1.6 T segment layer rate are added to the MTN equipment.

In step 2, the MTN channel layer and segment layer both adopt the 256/257b encoding format. The time slot granularity of 50 G, which is compatible with the current MTN, is defined. The encoding format of the control code block adopts the encoding manner two, and the new type header may directly use an uncompressed value of the pre-configured type header of the 64/66b control code block (for example, 0xFE and 0xFB do not repeat with normal 256/257b encoding, and can be correctly identified by the MTN channel layer), and other unused overheads are reserved as reserved fields, as shown in FIG. 19.

In step 3, the MTN channel layer performs rate adaptation for client traffic using the defined 256/256b IDLE encoding, and inserts the defined 256/257b OAM encoding to transmit OAM information of the channel layer. Since the 256/257b OAM overhead encoding may be directly identified, the OAM format may be redefined to utilize the OAM overhead space more efficiently, as shown in FIG. 20.

In step 4, the MTN segment layer divides time slots using 639*32 cycles (the same overhead ratio as the current MTN segment layer 1023*20/32 = 639 is adopted), with the time slot granularity of 50 G. For the 800 G interface physical layer solution based on 8*200 G, the segment layer instance solution at a 200 G rate is selected to facilitate Ethernet energy-saving coordination at the 200 G bus-level.

In step 5, the MTN segment layer pads the deactivated instance with an 8+1 pattern of Error encoding and IDLE encoding, and the 8+1 pattern of LF encoding and IDLE encoding for the fault segment layer is shown in FIG. 17.

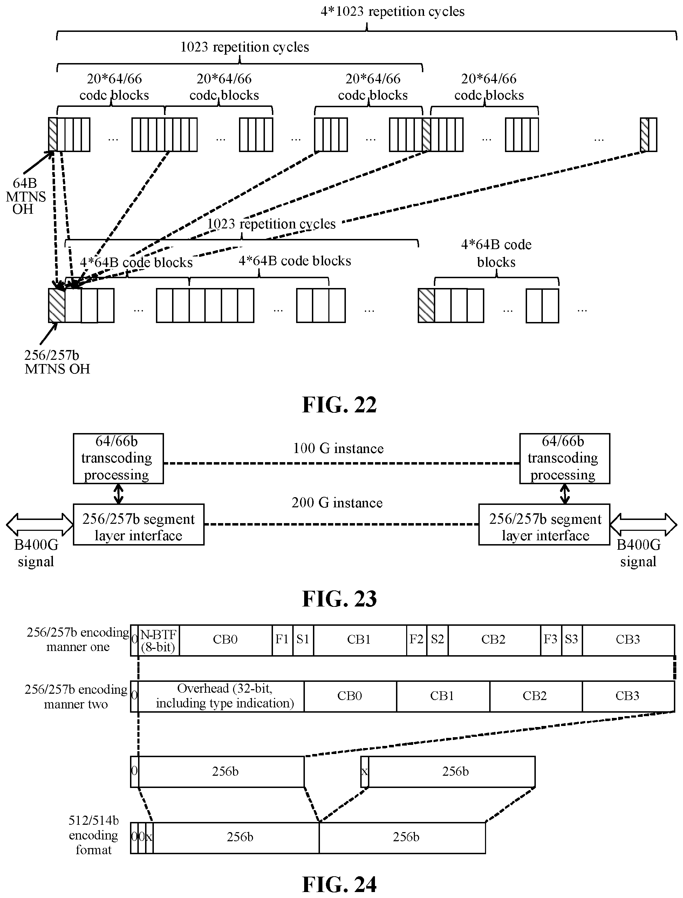

In embodiment three, the data transmission process of the MTN supporting hybrid networking of the time slot granularity of 5 G and the time slot granularity of 20 G is described. FIG. 21 is a schematic diagram illustrating hierarchical channel switching for MTN B400G 256/257b encoding according to an embodiment of the present disclosure. FIG. 22 is a schematic diagram illustrating MTN 800 G 256/257b segment layer encoding with a time slot granularity of 20 G according to an embodiment of the present disclosure. FIG. 23 is a schematic diagram illustrating MTN B400G hierarchical instance compatible processing according to an embodiment of the present disclosure.

In step 1, an 800 G MTN segment layer interface, and MTN channel switching, channel OAM processing and corresponding rate adaptation functions at an 800 G segment layer rate are added to MTN equipment. Moreover, the MTN equipment is compatible with the current segment layer interface less than 400 G.

In step 2, the MTN channel layer and segment layer both adopt the 256/257b encoding format. The time slot granularity of 20 G, which is compatible with the current MTN, is defined, and the current MTN time slot granularity of 5 G is also accommodated. The encoding format of the control code block adopts the encoding manner one, and the new type header may directly use an uncompressed value of the pre-configured type header of the 64/66b control code block, as shown in FIG. 15.

In step 3, MTN channel switching supports the hierarchical time slot granularity and channel switching thereof. For the B400G signal with the B400G 256/257b encoding format, transmission and reception are performed through the B400G interface. For service signals that do not require channel switching with the time slot granularity of 5 G, channel switching with the time slot granularity of 20 G in the 256/257b encoding format may be performed directly without transcoding to restore to the 64/66b encoding format for channel switching with the time slot granularity of 5 G. For the service signals that need to be compatible with the existing channel switching processing with the time slot granularity of 5 G, the signals are transcoded from the 256/257b encoding format to restore the 64/66b encoding format at the MTN B400G segment layer, and then the channel switching with the time slot granularity of 5G is performed. After the channel switching is completed, the signals are transcoded from the 64/66b encoding format to the 256/257b encoding format, and then continue to be transmitted and received through the B400G segment layer using the 256/257b encoding format, as shown in FIG. 21.

In step 4, MTN channel switching encoding processing may adopt an encoding format compatible with the time slot granularity of 5 G, that is, the four consecutive 64/66b code blocks with the time slot granularity of 5 G are encoded into a 256/257b code block to form the time slot granularity of 20 G, as shown in FIG. 22.

In step 5, for the MTN B400G segment layer instance, a 200 G rate is selected, and a hierarchical processing manner similar to the existing MTN 100 G instance may be formed. The 200 G instance of the B400G segment layer may be formed by interleaving two existing MTN 100 G instances, thereby forming a hierarchical instance mapping relationship, as shown in FIG. 23.

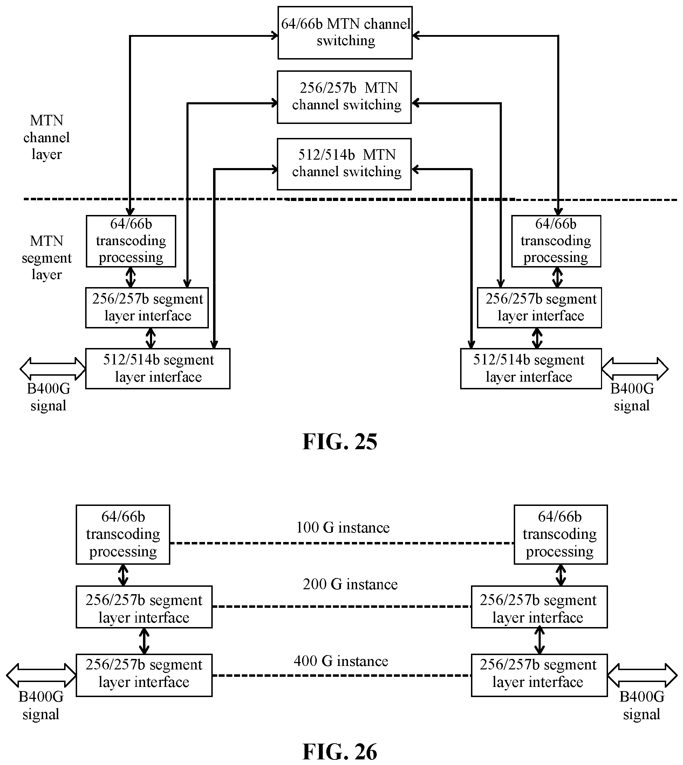

In embodiment four, the data transmission process of the MTN supporting a 1.6 T interface with the time slot granularity of 50 G using the 512/514b encoding format is described. FIG. 24 is a schematic diagram of a newly defined IDLE and OAM encoding in an MTN 1.6 T 512/514b encoding format according to an embodiment of the present disclosure. FIG. 25 is a schematic diagram illustrating hierarchical channel switching based on MTN B400G 256/257b encoding according to an embodiment of the present disclosure. FIG. 26 is a schematic diagram illustrating MTN B400G multi-hierarchical instance compatible processing according to an embodiment of the present disclosure.

In step 1, except for the encoding format, the other operations are identical to operations in embodiment two.

In step 2, the MTN channel layer and segment layer both adopt the 512/514b encoding format. The 256/257b encoding format defined may be directly transcoded into the 512/514b encoding format. The transcoding rules are identical to the transcoding rules of the existing solution, except that the 256/257b encoding format contains the specific defined encoding format, as shown in FIG. 24.

In step 3, MTN channel switching supports the hierarchical time slot granularity and channel switching thereof. For the B400G signal in the B400G 512/514b encoding format, transmission and reception are performed through the B400G interface. When the channel switching of the 256/257b encoding format is not required, the MTN channel switching of the 512/514b encoding format is performed directly without transcoding to the 256/267b encoding format. Otherwise, the B400G signals may first be transcoded to the 256/257b encoding format for MTN channel switching. Similarly, for service signals that do not require MTN channel switching of the 64/66b encoding format, channel switching may be performed based on the transcoded 256/257b encoding format without further transcoding to restore the 64/66b encoding format for channel switching. For the service signals that need to be compatible with the channel switching processing with the existing time slot granularity of 5 G, at the MTN B400G segment layer, the signals are transcoded from the 512/514b encoding format to the 256/257b encoding format and further transcoded to restore the 64/66b encoding format. Then, the channel switching with the time slot granularity of 5 G is performed. After the channel switching is completed, the signals are transcoded from the 64/66b encoding format to the 256/257b encoding format and further transcoded to the 512/514b encoding format, and then continue to be transmitted and received through the B400G segment layer using the 512/514b encoding format, as shown in FIG. 25.

In step 4, for the MTN B400G segment layer instance in the 512/514b encoding format, a 400 G rate is selected and is compatible with the rate of the 200 G instance in the B400G 256/257b encoding format, and a multi-hierarchical processing manner similar to the existing MTN 100 G instance in the 64/66b encoding format may be formed. The B400G segment layer instance in the 512/514b encoding format may be formed by interleaving 2*200 G instances in the 256/257b encoding format, and the 200 G instances in the 256/257b encoding format in the B400G segment layer may be formed by interleaving existing MTN 2*100 G instances in the 64/66b encoding format, thereby forming a multi-hierarchical instance mapping relationship, as shown in FIG. 26.

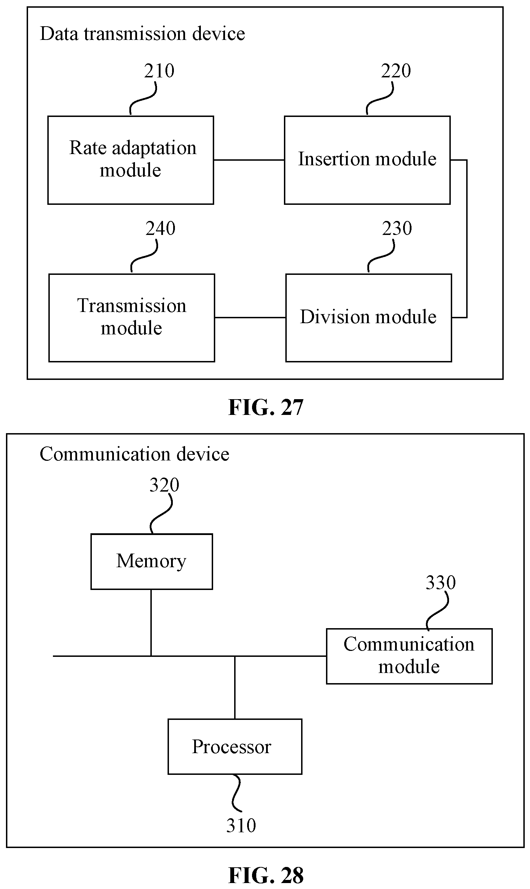

In an embodiment, FIG. 27 is a structural block diagram of a data transmission device according to an embodiment of the present disclosure. This embodiment is applied to a first communication device. As shown in FIG. 27, the data transmission device in this embodiment includes a rate adaptation module 210, an insertion module 220, a division module 230 and a transmission module 240.

The rate adaptation module 210 is configured to perform rate adaptation on a service signal stream in a signal adaptation manner through the first channel layer to obtain a corresponding service signal frame.

The insertion module 220 is configured to insert first information of a first encoding format into the service signal frame through the first channel layer.

The division module 230 is configured to divide time slots in a time slot division manner through the first segment layer to obtain a corresponding time slot granularity.

The transmission module 240 is configured to select a corresponding segment layer instance according to the time slot granularity through the first segment layer and transmit the corresponding segment layer instance to a second communication device.

In an embodiment, the signal adaptation manner at least includes one of the following: signal adaptation of a single channel at the first interface rate, and signal adaptation of at least two channels at a second interface rate. The second interface rate is less than the first interface rate.

In an embodiment, the service signal stream includes the service signal frame. The service signal frame includes a first number of first-type code blocks. A code block type of the first-type code blocks at least includes one of: an idle code block, an LF code block related to fault indication, an RF code block related to fault indication, an LPI code block, an error code block, a sequence code block, and a padding code block.

In an embodiment, when second-type code blocks are composed of a first number of first-type code blocks, and the first number is greater than 1, a control code block in the first-type code blocks is adjusted to a boundary of the first-type code blocks by adjusting a position of the control code block and combining rate adaptation of the first-type code blocks to obtain the corresponding second-type code blocks.

In an embodiment, when the first number of first-type code blocks have the same code block type, all control code blocks in the first number of first-type code blocks are adapted into one group of control code blocks, and the group of control code blocks are encoded using at least one of the following N*66B encoding formats: 64/66b encoding, 256/257b encoding, or 512/514b encoding.

Overhead indication information is added to the N*66B encoding format. The overhead indication information at least includes one of: a code block type of the second-type code blocks, and a pattern type of the second-type code blocks.

In an embodiment, a determination manner of the second-type code blocks includes the following:

A type header of the first code block in the first-type code blocks is redefined as a compatible new type.

Alternatively, a control code block type indication in each first-type code block is moved to a first position, an overhead content in each first-type code block is moved to a second position, and a format or content of the first position is redefined. The first position is located prior to the second position.

In an embodiment, the redefined type header includes a redefined first nibble and a redefined second nibble.

In an embodiment, when the first-type code blocks are idle code blocks, and a rate of the service signal stream does not match a rate of the first channel layer, addition or deletion of the idle code blocks is performed using a redefined idle encoding format as a basic unit.

The redefined idle encoding format includes the first encoding format with a code block type in type indication information being an idle code block, and the first encoding format with a code block type in the overhead indication information being an idle code block.

In an embodiment, the first channel layer at least includes one of the following functions: inserting an OAM overhead at a source end, terminating an OAM overhead at a sink end, non-intrusively monitoring an overhead at an intermediate node, and channel switching with the first interface rate as a segment layer interface.

In an embodiment, the first channel layer supports channel OAM processing; and the channel OAM processing at least includes one of the following functions: OAM encoding format, OAM transmission and reception processing, and non-intrusive monitoring.

In an embodiment, OAM function is processed by identifying an OAM-type field of the first encoding format.

In an embodiment, a manner of inserting the first information into the service signal frame through the first channel layer includes one of: taking an identified and defined OAM code block of the first encoding format as an existing idle code block of the first encoding format; deleting an idle code block after an OAM code block is inserted into an encoding inter-frame gap; padding an idle code block after an OAM code block is deleted; and inserting an OAM code block at any position of the second-type code blocks in real time according to an insertion interval of the OAM code block.

In an embodiment, when the first-type code blocks are OAM code blocks, a determination manner of the second-type code blocks further includes combining payload bits in the first number of first-type code blocks and combining overhead bits in the first number of first-type code blocks.

In an embodiment, a product of the time slot granularity and a number of time slots satisfies a total rate of the first segment layer.

In an embodiment, a configuration manner for encoding the first number of first-type code blocks into the second-type code blocks includes: performing cyclic interpolation using a product of the first number and a number of bit repetitions, and consecutively using the first number of first-type code blocks.

In an embodiment, the data transmission device further includes a determination module.

The determination module is configured to determine a corresponding number of time slots according to the time slot granularity.

A product of the number of time slots and the time slot granularity is equal to an interface capacity of the first segment layer.

In an embodiment, during a process of switching channels at different rate levels by the first channel layer, a hierarchical switching path is adopted, and switching of multiple rate levels and switching of encoding formats are supported.

In an embodiment, the first segment layer at least includes one of the following functions: rate adaptation of a channel layer and a segment layer, time slot mapping of a segment layer, and adaptation of a segment layer and a service layer.

In an embodiment, a manner of the rate adaptation between the first channel layer and the first segment layer includes: the signal adaptation manner with the first interface rate, and rate adaptation using different encoding formats.

In an embodiment, the first segment layer unifies and simplifies support of a segment layer for the first interface rate through an instance, and the first segment layer selects a second number of segment layer instances with a third interface rate.

The time slot granularity of the first segment layer is the same as a time slot granularity of the first channel layer, or a rate level corresponding to the time slot granularity of the first segment layer is greater than a rate level corresponding to a time slot granularity of the first channel layer.

In an embodiment, the padding code block supports carrying an auxiliary overhead for segment layer instance identification through a redefined code block, and redefining the padding code block includes redefining an original padding code block format and introducing a new padding code block format.

In an embodiment, the first segment layer supports dynamic activation and deactivation of the segment layer instance.

In an embodiment, the data transmission device further includes a transmission module.

The transmission module is further configured to transmit an activated segment layer instance to the second communication device through the first segment layer. The activated segment layer instance carries an instance identifier and service data, and a padding pattern of the activated segment layer instance includes at least one of an error code block, or an idle code block.

In an embodiment, when a service traffic of the first segment layer is less than a preset energy-saving traffic, an LPI signal is replaced with overhead signaling of the first segment layer to trigger the first segment layer to perform time slot switching.

In an embodiment, the data transmission device further includes a redefinition module configured to redefine a fault overhead format and a fault encoding format of the first encoding format through the first segment layer to indicate a fault. A padding pattern corresponding to the fault includes at least one of an idle code block, or an error code block.

The data transmission device provided in this embodiment is configured to implement the data transmission method applied to the first communication device in the embodiments shown in FIG. 2. The implementation principle and technical effect of the data transmission device provided in this embodiment are similar, and will not be repeated here.

In an embodiment, FIG. 28 is a schematic structural diagram of a communication device according to an embodiment of the present disclosure. As shown in FIG. 28, the communication device provided by the present disclosure includes a processor 310, a memory 320 and a communication module 330. The communication device may include one or more processors 310, and one processor 310 is taken as an example in FIG. 28. The communication device may include one or more memories 320, and one memory 320 is taken as an example in FIG. 28. The processor 310, the memory 320 and the communication module 330 in the communication device may be connected via a bus or other means, and a connection via a bus is taken as an example in FIG. 28. In this embodiment, the communication device may be an MTN device.

The memory 320, as a computer-readable storage medium, may be configured to store software programs, computer-executable programs, and modules, such as program instructions/modules (for example, the rate adaptation module 210, the insertion module 220, the division module 230, and the transmission module 240 in the data transmission device) corresponding to the device in any embodiment of the present disclosure. The memory 320 may include a program storage region and a data storage region. The program storage region may store an operating system and at least one application required for a function. The data storage region may store data created according to the use of the device, etc. Furthermore, the memory 320 may include a high-speed random access memory, and may further include a non-volatile memory, such as at least one magnetic disk memory, a flash memory, or other non-volatile solid-state memory. In some examples, the memory 320 may further include memories remotely located with respect to the processor 310, and these remote memories may be connected to the device through a network. Examples of the above networks include, but are not limited to, the Internet, an intranet, a local area network, a mobile communication network, and combinations thereof.

When the communication device is the first communication device, the device provided above may be configured to execute the data transmission method applied to the first communication device provided in any of the above embodiments, and has corresponding functions and effects.

The embodiments of the present disclosure also provide a storage medium containing a computer-executable instruction. The computer-executable instruction, when executed by a computer processor, is configured to execute the data transmission method applied to the first communication device. The data transmission method includes the following: rate adaptation is performed on a service signal stream in a signal adaptation manner through the first channel layer to obtain a corresponding service signal frame; first information of a first encoding format is inserted into the service signal frame through the first channel layer; time slots are divided in a time slot division manner through the first segment layer to obtain a corresponding time slot granularity; and a corresponding segment layer instance is selected according to the time slot granularity through the first segment layer, and the corresponding segment layer instance is transmitted to a second communication device.

It is to be understood by those skilled in the art that the term device covers any suitable type of wireless user equipment, for example, a mobile phone, a portable data processing apparatus, a portable web browser, or a vehicle-mounted mobile station.

In general, multiple embodiments of the present disclosure may be implemented in hardware or special-purpose circuits, software, logic, or any combination thereof. For example, some aspects may be implemented in hardware while other aspects may be implemented in firmware or software that may be executed by a controller, a microprocessor, or another computing apparatus, though the present disclosure is not limited thereto.

The embodiments of the present disclosure may be implemented by computer program instructions executed by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present disclosure may represent program steps, may represent interconnected logic circuits, modules, and functions or may represent a combination of program steps with logic circuits, modules, and functions. A computer program may be stored in a memory. The memory may be of any type suitable for a local technical environment and may be implemented using any suitable data storage technology. The memory may be, for example, but not limited to, a read-only memory (ROM), a random-access memory (RAM), an optical storage apparatus and system (digital video disc (DVD) or compact disc (CD)) or the like. Computer-readable media may include non-transitory storage media. The data processor may be of any type suitable for the local technical environment, such as, but not limited to, a general-purpose computer, a special-purpose computer, a microprocessor, a digital signal processor (DSP), an application specific integrated circuit (ASIC), a field-programmable gate array (FPGA) and a processor based on a multi-core processor architecture.

## Claims

1. A data transmission method, being applied to a first communication device, wherein the first communication device comprises a first channel layer and a first segment layer, and the first channel layer and the first segment layer support a first interface rate beyond 400 G; and the method comprises:
performing, through the first channel layer, rate adaptation on a service signal stream in a signal adaptation manner to obtain a corresponding service signal frame;
inserting, through the first channel layer, first information of a first encoding format into the service signal frame;
dividing, through the first segment layer, time slots in a time slot division manner to obtain a corresponding time slot granularity; and
selecting, through the first segment layer, a corresponding segment layer instance according to the time slot granularity, and transmitting the corresponding segment layer instance to a second communication device.

2. The data transmission method according to claim 1, wherein the signal adaptation manner at least comprises one of: signal adaptation of a single channel at the first interface rate, and signal adaptation of at least two channels at a second interface rate; wherein the second interface rate is less than the first interface rate.

3. The data transmission method according to claim 1, wherein the service signal stream comprises the service signal frame, wherein the service signal frame comprises a first number of first-type code blocks; a code block type of the first-type code blocks at least comprises one of: an idle code block, a local fault code block related to fault indication, a remote fault code block related to fault indication, a low power idle, LPI, code block, an error code block, a sequence code block, and a padding code block.

4. The data transmission method according to claim 1, wherein in response to second-type code blocks being composed of a first number of first-type code blocks, and in response to the first number being greater than 1, a control code block in the first-type code blocks is adjusted to a boundary of the first-type code blocks by adjusting a position of the control code block and combining rate adaptation of the first-type code blocks to obtain the corresponding second-type code blocks.

5. The data transmission method according to claim 4, wherein in response to the first number of first-type code blocks having a same code block type, all control code blocks in the first number of first-type code blocks are adapted into one group of control code blocks, and the one group of control code blocks are encoded using at least one of following N*66B encoding formats: 64/66b encoding, 256/257b encoding, or 512/514b encoding; and
overhead indication information is added to the N*66B encoding format; wherein the overhead indication information at least comprises one of: a code block type of the second-type code blocks, and a pattern type of the second-type code blocks.

6. The data transmission method according to claim 4, wherein a determination manner of the second-type code blocks comprises:
redefining a type header of a first code block in the first-type code blocks as a compatible new type; or
moving a control code block type indication in each of the first-type code blocks to a first position, moving an overhead content in each of the first-type code blocks to a second position, and redefining a format of the first position or content of the first position, wherein the first position is located prior to the second position.

7. The data transmission method according to claim 6, wherein the redefined type header comprises a redefined first nibble and a redefined second nibble.

8. The data transmission method according to claim 5 or claim 6, wherein in response to the first-type code blocks being idle code blocks, and in response to a rate of the service signal stream not matching a rate of the first channel layer, addition or deletion of the idle code blocks is performed using a redefined idle encoding format as a basic unit;
wherein the redefined idle encoding format comprises the first encoding format with a code block type in type indication information being an idle code block, and the first encoding format with a code block type in the overhead indication information being an idle code block.

9. The data transmission method according to claim 1, wherein the first channel layer at least comprises one of following functions: inserting an operation administration maintenance, OAM, overhead at a source end, terminating an OAM overhead at a sink end, non-intrusively monitoring an overhead at an intermediate node, and channel switching with the first interface rate as a segment layer interface.

10. The data transmission method according to claim 1, wherein the first channel layer supports channel OAM processing; and the channel OAM processing at least comprises one of following functions: OAM encoding format, OAM transmission and reception processing, and non-intrusive monitoring.

11. The data transmission method according to claim 1, wherein OAM function is processed by identifying an OAM-type field of the first encoding format.

12. The data transmission method according to claim 4, wherein a manner of inserting the first information into the service signal frame through the first channel layer comprises one of: taking an identified and defined OAM code block of the first encoding format as an existing idle code block of the first encoding format; deleting an idle code block after an OAM code block is inserted in an encoding inter-frame gap; padding an idle code block after an OAM code block is deleted; and inserting an OAM code block at any position of the second-type code blocks in real time according to an insertion interval of the OAM code block.

13. The data transmission method according to claim 4, wherein in response to the first-type code blocks being OAM code blocks, a determination manner of the second-type code blocks further comprises:
combining payload bits in the first number of first-type code blocks and combining overhead bits in the first number of first-type code blocks.

14. The data transmission method according to claim 4, wherein a product of the time slot granularity and a number of time slots satisfies a total rate of the first segment layer.

15. The data transmission method according to claim 14, wherein a configuration manner for encoding the first number of first-type code blocks into the second-type code blocks comprises: performing cyclic interpolation using a product of the first number and a number of bit repetitions, and consecutively using the first number of first-type code blocks.

16. The data transmission method according to claim 1, further comprising: determining a corresponding number of time slots according to the time slot granularity;
wherein a product of the number of time slots and the time slot granularity is equal to an interface capacity of the first segment layer.

17. The data transmission method according to claim 1, wherein during a process of switching channels at different rate levels by the first channel layer, a hierarchical switching path is adopted, and switching of a plurality of rate levels and switching of encoding formats are supported.

18. The data transmission method according to claim 1, wherein the first segment layer at least comprises one of following functions: rate adaptation of a channel layer and a segment layer, time slot mapping of a segment layer, and adaptation of a segment layer and a service layer.

19. The data transmission method according to claim 1, wherein a manner of the rate adaptation between the first channel layer and the first segment layer comprises: the signal adaptation manner with the first interface rate, and rate adaptation using different encoding formats.

20. The data transmission method according to claim 1, wherein the first segment layer unifies and simplifies support of a segment layer for the first interface rate through an instance, and the first segment layer selects a second number of segment layer instances with a third interface rate; and
the time slot granularity of the first segment layer is the same as a time slot granularity of the first channel layer, or a rate level corresponding to the time slot granularity of the first segment layer is greater than a rate level corresponding to a time slot granularity of the first channel layer.

21. The data transmission method according to claim 3, wherein the padding code block supports carrying an auxiliary overhead for segment layer instance identification through a redefined code block, and redefining the padding code block comprises redefining an original padding code block format and introducing a new padding code block format.

22. The data transmission method according to claim 1, wherein the first segment layer supports dynamic activation and deactivation of the segment layer instance.

23. The data transmission method according to claim 1, further comprising:
transmitting, through the first segment layer, an activated segment layer instance to the second communication device, wherein the activated segment layer instance carries an instance identifier and service data, and a padding pattern of the activated segment layer instance comprises at least one of an error code block, or an idle code block.

24. The data transmission method according to claim 1, wherein in response to a service traffic of the first segment layer being less than a preset energy-saving traffic, replacing an LPI signal with overhead signaling of the first segment layer to trigger the first segment layer to perform time slot switching.

25. The data transmission method according to claim 1, further comprising:
redefining, through the first segment layer, a fault overhead format and a fault encoding format of the first encoding format to indicate a fault, wherein a padding pattern corresponding to the fault comprises at least one of an idle code block, or an error code block.

26. A communication device, comprising: a memory, and at least one processor; wherein
the memory is configured to store at least one program; and
the at least one program, when executed by the at least one processor, causes the at least one processor to implement the data transmission method according to any one of claims 1 to 25.

27. A storage medium storing a computer program, wherein the computer program, when executed by a processor, implements the data transmission method according to any one of claims 1 to 25.
